# EUROPEAN PATENT APPLICATION

(11) **EP 3 109 046 A1**
(43) Date of publication of application: **28.12.2016**
(21) Application number: 15752096.6
(22) Date of filing: 20.02.2015
(51) Int. Cl.: B32B 27/30, B32B 27/00, C08F 214/26

(54) **FLUORORESIN LAMINATE AND METHOD FOR MANUFACTURING SAME**

(30) Priority: 21.02.2014 JP 2014032232
(71) Applicant: Asahi Glass Company, Limited, Tokyo 100-8405 (JP)
(72) Inventor: TAGUCHI, Daisuke, Tokyo 100-8405 (JP); AIDA, Shigeru, Tokyo 100-8405 (JP); SASAKI, Toru, Tokyo 100-8405 (JP)
(74) Representative: Müller-Boré & Partner Patentanwälte PartG mbB
(86) International application number: PCT/JP2015/054837
(87) International publication number: WO 2015/125930

(57) **Abstract**

Provided is a fluororesin laminate in which a fluorinated copolymer layer is firmly adhered to a vinyl chloride type copolymer layer, and its production process.

A fluororesin laminate comprising a layer (I) containing a fluorinated copolymer (1) having a crystallization temperature of from 100 to 220°C, a layer (II) made of an epoxy group-containing ethylene type copolymer or its composition (2) and a layer (III) made of a vinyl chloride type copolymer or its composition (3), which layers are sequentially laminated.

## Description

### TECHNICAL FIELD

The present invention relates to a fluororesin laminate comprising a fluorinated copolymer layer, and a process for producing the laminate.

### BACKGROUND ART

A fluorinated copolymer such as polytetrafluoroethylene, a tetrafluoroethylene/perfluoro (alkyl vinyl ether) copolymer or an ethylene/tetrafluroethylene copolymer has characteristics excellent in chemical resistance, heat resistance, weather resistance, low frictional properties, electrical insulation properties, etc. and has been employed in various fields including semiconductor industries, aircraft and automobile industries.

Since the fluorinated copolymers have low mechanical strength and are expensive, attempts of laminating them with other conventional resin material, which is cheap and shows excellent mechanical strength, have been made. However, because fluorinated copolymers are poor in adhesion to other materials, it has been difficult to obtain a laminate in which a fluorinated copolymer is firmly adhered to such other materials.

Various methods for producing a laminate in which a fluorinated copolymer is firmly adhered to other materials have been studied. For example, Paten Document 1 discloses a technique of providing, between a specific fluorinated copolymer layer and a layer made of a polyolefin resin or the like, a layer of an epoxy group-containing ethylene type copolymer, thereby to firmly adhere the fluorinated copolymer layer to the layer made of a polyolefin resin or the like.

### PRIOR ART DOCUMENTS

### PATENT DOCUMENTS

Patent Document 1: JP-A-2006-297843

### DISCLOSURE OF INVENTION

### TECHNICAL PROBLEM

However, it was confirmed by the present inventors that, while a fluorinated copolymer layer is firmly adhered to a layer made of a polyolefin resin according to the technique described in Patent Document 1, when a vinyl chloride type copolymer is used instead of a polyolefin resin, a fluorinated copolymer layer is not sufficiently adhered to a vinyl chloride type copolymer layer.

The present invention is to provide a laminate in which a fluorinated copolymer layer is firmly adhered to a vinyl chloride type copolymer layer, and a process for producing such a laminate.

The present inventors conducted extensive studies from such a point of view and found that a fluororesin laminate in which a fluorinated copolymer layer is firmly adhered to a vinyl chloride type copolymer layer *via* an epoxy-group containing ethylene type copolymer layer can be obtained by using a fluorinated copolymer which has a specific crystallization temperature range, and have accomplished the present invention.

### SOLUTION TO PROBLEM

The present invention has the following structures.
[1] A fluororesin laminate comprising a layer (I) containing a fluorinated copolymer (1), a layer (II) made of an epoxy group-containing ethylene type copolymer or its composition (2) and a layer (III) made of a vinyl chloride type copolymer or its composition (3), which layers are sequentially laminated,
   wherein the fluorinated copolymer (1) comprises repeating units (A) based on tetrafluoroethylene, repeating units (B) based on ethylene and repeating units (C) based on at least one member selected from the group consisting of itaconic acid, itaconic anhydride, 5-norbornene-2,3-dicarboxylic acid, 5-norbornene-2,3-dicarboxylic anhydride, citraconic acid and citraconic anhydride,
   the content of the repeating units (A) is from 25 to 80 mol%, the content of the repeating units (B) is from 20 to 75 mol%, and the content of the repeating units (C) is from 0.01 to 5 mol%, based on the total molar amount of the repeating units (A), the repeating units (B) and the repeating units (C), and
   the fluorinated copolymer (1) has a crystallization temperature of from 100 to 220°C.
[2] The fluororesin laminate according to [1], wherein, in the epoxy group-containing ethylene type copolymer or its composition (2), the epoxy group-containing ethylene type copolymer is an epoxy group-containing ethylene type copolymer comprising repeating units (E) based on ethylene and repeating units (F) based on an epoxy group-containing monomer, and the composition is an epoxy group-containing ethylene type copolymer composition containing at least 50 mass% of the epoxy group-containing ethylene type copolymer.
[3] The fluororesin laminate according to [1] or [2], wherein, in the vinyl chloride type copolymer or its composition (3), the vinyl chloride type copolymer is a polyvinyl chloride copolymer, a chlorinated polyvinyl chloride copolymer or a mixture of a polyvinyl chloride copolymer and a chlorinated polyvinyl chloride copolymer, and the composition is a vinyl chloride type copolymer composition containing more than 50 mass% of the vinyl chloride type copolymer.
[4] The fluororesin laminate according to any one of [1] to [3], wherein the fluorinated copolymer (1) further comprises repeating units (D) based on another monomer and the molar ratio of the repeating units (A) to the repeating units (D) [(A)/(D)] is from 70/30 to 99.9/0.1.
[5] The fluororesin laminate according to [4], wherein the repeating units (D) contain repeating units (D1) based on hexafluoropropylene as another monomer.
[6] The fluororesin laminate according to [5], wherein the repeating units (D) further contain repeating units (D2) based on CH₂=CH(CF₂)_{Q1}F (wherein Q1 is an integer of from 2 to 10) as another monomer.
[7] A process for producing the fluororesin laminate as defined in any one of [1] to [4], comprising a heat lamination step of laminating the layer (III) and a layer other than the layer (III) under heating, wherein the heat lamination step is carried out at a temperature of from 150 to 260°C.

### ADVANTAGEOUS EFFECTS OF INVENTION

According to the fluororesin laminate of the present invention, it is possible to obtain a fluororesin laminate in which a fluorinated copolymer layer is firmly adhered to a vinyl chloride type copolymer layer.

According to the process for producing a fluororesin laminate of the present invention, it is possible to obtain a fluororesin laminate in which a fluorinated copolymer layer is firmly adhered to a vinyl chloride type copolymer layer.

### DESCRIPTION OF EMBODIMENT(S)

The fluororesin laminate of the present invention comprises a laminate [(I)/(II)/(III)] in which a layer (I) containing a fluorinated copolymer (1), a layer (II) made of an epoxy group-containing ethylene type copolymer or its composition (2) and a layer (III) made of a vinyl chloride type copolymer or its composition (3) are sequentially laminated.

### (Fluorinated copolymer (1))

The fluorinated copolymer (1) comprises repeating units (A) based on tetrafluoroethylene (hereinafter referred to as TFE) and repeating units (B) based on ethylene, and repeating units (C) based on at least one member selected from the group consisting of itaconic acid (hereinafter referred to as IAC), itaconic anhydride (hereinafter referred to as IAH), 5-norbornene-2,3-dicarboxylic acid (hereinafter referred to as NAC), 5-norbornene-2,3-dicarboxylic anhydride (hereinafter referred to as NAH), citraconic acid (hereinafter referred to as CAC) and citraconic anhydride (hereinafter referred to as CAH), and has a crystallization temperature of from 100 to 220°C.

As the fluorinated copolymer (1), one type may be used alone, or two or more types may be used in combination.

Based on the total molar amount of the repeating units (A), the repeating units (B) and the repeating units (C), the content of the repeating units (A) is from 25 to 80 mol%, preferably from 40 to 65 mol%, more preferably from 45 to 63 mol%, the content of the repeating units (B) is from 20 to 75 mol%, preferably from 35 to 50 mol%, more preferably from 37 to 55 mol%, and the content of the repeating units (C) is from 0.01 to 5 mol%, preferably from 0.03 to 3 mol%, more preferably from 0.05 to 1 mol%.

When the contents of the repeating units (A) to (C) fall within the above ranges, the fluorinated copolymer (1) is excellent in chemical resistance and heat resistance. When the content of the repeating units (B) falls within the above ranges, excellent chemical resistance and excellent heat resistance are obtained. When the content of the repeating units (C) falls within the above ranges, the fluorinated copolymer (1) is excellent in adhesion to other layers.

The molar ratio of the repeating units (A) to the repeating units (B) [(A)/(B)] is preferably from 25/75 to 80/20, preferably from 40/60 to 65/35, more preferably from 42/58 to 63/37, most preferably from 45/55 to 61/39. When the molar ratio [(A)/(B)] is at most the upper limit value of the above range, the fluorinated copolymer (1) is more excellent in mechanical strength, and when the molar ratio is at least the lower limit value of the above range, the fluorinated copolymer (1) is more excellent in heat resistance. When the molar ratio [(A)/(B)] is within the above range, the fluorinated copolymer (1) is excellent in mechanical strength and heat resistance.

The repeating units (C) are repeating units based on at least one member selected from the group consisting of IAC, IAH, NAC, NAH, CAC and CAH, and among them, repeating units based on IAH are preferred in view of excellent polymerization property. When at least one member selected from the group consisting of IAC, IAH, NAC, NAH, CAC and CAH is used, a fluorinated copolymer comprising repeating units based on these acid monomers may be easily produced without requiring a special polymerization method disclosed in JP-A-11-193312 which is necessary when maleic anhydride is used.

The fluorinated copolymer (1) preferably comprises, in addition to the repeating units (A) to (C), repeating units (D) based on another monomer, from the viewpoint of lowering the crystallization temperature of the fluorinated copolymer (1) in order to easily control the crystallization temperature to be within the above range.

Such another monomer constituting the repeating units (D) is a monomer other than TFE, ethylene, IAC, IAH, NAC, NAH, CAC and CAH, and may, for example, be a fluorinated monomer or a non-fluorinated monomer. As such another monomer, one type may be used alone, or two or more types may be used in combination

The fluorinated monomer constituting the repeating units (D) is a fluorine atom-containing monomer other than TFE and may, for example, be a fluorinated olefin such as vinyl fluoride, vinylidene fluoride (hereinafter sometimes referred to as VDF), trifluoroethylene, hexafluoropropylene (hereinafter sometimes referred to as HFP), chlorotrifluoroethylene, CH₂=CH(CF₂)_{Q1}F (Q1 is an integer of from 2 to 10) or CH₂=CF(CF₂)_{Q2}H (Q2 is an integer of from 2 to 10), a fluoro(alkyl vinyl ether) such as CF₂=CFOR¹ (R¹ is a C₁₋₁₀ fluoroalkyl group which may contain an etheric oxygen atom), CF₂=CFOR²SO₂X¹ (R² is a C₁₋₁₀ fluoroalkylene group which may contain an etheric oxygen atom, and X¹ is a halogen atom or a hydroxy group), CF₂=CFOR³CO₂X² (R³ is a C₁₋₁₀ fluoroalkylene group which may contain an etheric oxygen atom, and X² is a hydrogen atom or a C₁₋₃ alkyl group), CF₂=CF(CF₂)_{P}OCF=CF₂ (P is 1 or 2), and perfluoro (2-methylene-4-methyl-1,3-dioxolane). The fluorinated monomer may be linear or branched. As the fluorinated monomer, one type may be used alone, or two or more types may be used in combination.

Each of R¹ to R³ is preferably a C₁₋₁₀ fluoroalkyl group.

The number of carbon atoms of the fluoroalkyl group in each of R¹ to R³ is preferably form 1 to 6, more preferably from 1 to 4. As the fluoroalkyl group, a perfluoroalkyl group such as a CF₃ group, a C₂F₅ group or a C₃F₇ group is particularly preferred.

The Q1 of CH₂=CH(CF₂)_{Q1}F is preferably an integer of from 2 to 6, from the view point of polymerization properties and continuous operation.

CF₂=CFOR¹ may, specifically, be CF₂=CFOCF₃, CF₂=CFOCF₂CF₃, CF₂=CFOCF₂CF₂CF₃, CF₂=CFOCF₂CF₂CF₂CF₃, CF₂=CFO(CF₂)₈F and the like, and is preferably CF₂=CFOCF₂CF₂CF₃.

CH₂=CF(CF₂)_{Q2}H may, specifically, be CH₂=CF(CF₂)₃H, CH₂=CF(CF₂)₄H and the like.

Non-fluorinated monomer constituting the repeating units (D) is a monomer having no fluorine atom, other than IAC, IAH, NAC, NAH, CAC and CAH, and may, for example, be a vinyl ether such as methyl vinyl ether, ethyl vinyl ether, butyl vinyl ether, tert-buty) ether, methoxy ethyl vinyl ether or ethoxy ethyl vinyl ether; and an α-olefin such as propylene, butane or isobutene. As the non-fluorinated monomer, one type may be used alone, or two or more types may be used in combination.

From the viewpoint of heat resistance of the fluorinated copolymer (1), a fluorinated monomer is preferably used as such another monomer constituting the repeating units (D).

As the fluorinated monomer constituting the repeating units (D), it is preferred to use at least HFP. When the repeating units (D) contain repeating units (D1) based on HFP, without lowering the heat resistance of the fluorinated copolymer (1), the crystallization temperature of the fluorinated copolymer (1) can be easily controlled to be within the above range.

As the fluorinated monomer constituting the repeating units (D), it is more preferred to use the above-mentioned HFP in combination with at least one member selected from the group consisting of VDF, CF₂=CFOR¹ CH₂=CH(CF₂)_{Q1}F and CH₂=CF(CF₂)_{Q2}H, and is most preferred to use HFP in combination with CH₂=CH(CF₂)_{Q1}F. When the repeating units (D) contain the repeating units (D1) based on HFP and repeating units (D2) based on CH₂=CH(CF₂)_{Q1}F, the crystallization temperature of the fluorinated copolymer (1) can be easily controlled to be within the above range, which caused by having the repeating units (D1).

Further, by having the repeating units (D2), excellent stress crack resistance and moldability of the fluorinated copolymer (1) will be achieved.

In addition, by having the repeating units (D1) and the repeating units (D2), the productivity of the fluorinated copolymer (1) can be maintained at a satisfactory level.

The molar ratio of the repeating units (A) based on TFE to the repeating units (D) based on another monomer [(A)/(D)] is preferably from 60/40 to 99.9/0.1, more preferably from 65/35 to 98/2, most preferably from 68/32 to 95/5.

When the molar ratio [(A)/(D)] is at most the upper limit value of the above range, the crystallization temperature of the fluorinated copolymer (1) decreases, whereby the crystallization temperature can be easily controlled within the above range. When the molar ratio [(A)/(D)] is at least the lower limit value of the above range, the fluorinated copolymer (1) is more excellent in chemical resistance and heat resistance.

When the repeating units (D) contain the repeating units (D1) and the repeating units (D2), the molar ratio of the repeating units (D1) to the repeating units (D2) [(D1)/(D2)] is preferably from 75/25 to 97/3, more preferably from 80/20 to 96/4, most preferably from 85/15 to 95/5.

When the molar ratio [(D1)/(D2)] is at most the upper limit value of the above range, the fluorinated copolymer (1) is more excellent in stress crack resistance and moldability. When the molar ratio [(D1)/(D2)] is at least the lower limit value of the above range, the crystallization temperature of the fluorinated copolymer (1) can be easily controlled to be within the above range.

As the fluorinated copolymer (1), a copolymer comprising the following repeating units (1) to (5) may be mentioned, and among them, a copolymer of the following (5) is preferred.
(1) repeating units (A) / repeating units (B) / repeating units (C);
(2) repeating units (A) / repeating units (B) / repeating units (C) / repeating units (D1);
(3) repeating units (A) / repeating units (B) / repeating units (C) / repeating units (P) based on propylene;
(4) repeating units (A) / repeating units (B) / repeating units (C) / repeating units (D2) / repeating units (P) based on propylene;
(5) repeating units (A) / repeating units (B) / repeating units (C) / repeating units (D1) / repeating units (D2).

When the fluorinated copolymer (1) comprises the repeating units (D1), the molar ratio of the repeating units (D1) and repeating units (M1) other than the repeating units (D1) which constitute the fluorinated copolymer (1) [(M1)/(D1)] is preferably from 85/15 to 94/6, more preferably from 90/10 to 93/7.

When the molar ratio [(M1)/(D1)] is at most the upper limit value of the above range, the crystallization temperature of the fluorinated copolymer (1) is not too high, whereby excellent moldability will be achieved. When the molar ratio [(M1 )/(D1)] is at least the lower limit value of the above range, the polymerization reaction proceeds smoothly during the production of the fluorinated copolymer (1) with excellent productivity, and the fluorinated copolymer (1) is more excellent heat resistance and moldability. When the molar ratio [(M1)/(D1)] is within the above range, the fluorinated copolymer (1) is excellent in productivity, heat resistance and moldability.

When the fluorinated copolymer (1) comprises repeating units (P) based on propylene, the molar ratio of the repeating units (P) and repeating units (M2) other than the repeating units (P) which constitute the fluorinated copolymer (1) [(M2)/(P)] is preferably from 80/20 to 94/6, more preferably from 85/15 to 93/7.

When the molar ratio [(M2)/(P)] is at most the upper limit value of the above range, the crystallization temperature of the fluorinated copolymer (1) is not too high, whereby excellent moldability will be achieved. When the molar ratio [(M2)/(P)] is at least the lower limit value of the above range, the polymerization reaction proceeds smoothly during the production the fluorinated copolymer (1) with excellent productivity, and the fluorinated copolymer (1) is more excellent heat resistance and moldability.

The crystallization temperature of the fluorinated copolymer (1) is from 100 to 220°C, preferably from 120 to 205°C, more preferably from 150 to 200°C. When the crystallization temperature of the fluorinated copolymer (1) is at most the upper limit value of the above range, as described in detail later, it becomes possible to set the temperature of a heat lamination step for producing a fluororesin laminate comprising a layer (I) of fluorinated copolymer (1), a layer (II) of the below-described epoxy-group containing ethylene type copolymer or its composition (2) and a layer (III) of a vinyl chloride type copolymer or its composition (3), to a low temperature of e.g. from 150 to 260°C. Therefore, the thermal decomposition of the vinyl chloride type copolymer or its composition (3) is suppressed during the production of a fluororesin laminate, and accordingly a fluororesin laminate in which the layer (III) is firmly adhered to the layer (I) *via* the layer (II) is obtained. When the crystallization temperature of the fluorinated copolymer (1) is at least the lower limit value of the above range, the fluorinated copolymer (1) is excellent in heat discoloration resistance.

The crystallization temperature of the fluorinated copolymer (1) may, for example, be adjusted by the content of the repeating units (D) based on another monomer, and if the content of the repeating units (D) in all repeating units constituting the fluorinated copolymer (1) is large, the crystallization temperature of the fluorinated copolymer (1) tends to be low. The crystallization temperature is a temperature which corresponds to the maximum value of a crystallization peak obtained by using a differential scanning calorimeter after holding about 5 mg of a sample under dry air flow at 300°C for 10 minutes and then lowering the temperature to 100°C at a cooling rate of 10°C/min.

The fluorinated copolymer (1) is a copolymer which has a temperature showing a volume flow rate (hereinafter sometimes referred to as value Q) of from 0.1 to 1,000 mm³/sec at a temperature higher by from 20 to 50°C than the crystallization temperature of the copolymer. The fluorinated copolymer (1) is preferably a copolymer which has a temperature showing a value Q of from 0.1 to 500 mm³/sec, more preferably a copolymer which has a temperature showing a value Q of from 0.1 to 200 mm³/sec, most preferably a copolymer which has a temperature showing a value Q of from 0.2 to 100 mm³/sec, at a temperature higher by from 20 to 50°C than the crystallization temperature of the copolymer. The value Q is an index for a molecular weight.

When the value Q is at least the lower limit value of the above range, the fluorinated copolymer is excellent in moldability. When the value Q is at most the upper limit value of the above range, a fluororesin laminate comprising the fluorinated copolymer (1) layer has practically sufficient strength.

Here, in the present specification, value Q is a value obtained by measuring the fluorinated copolymer (1), as a measurement object, at a temperature higher by from 20 to 50°C than the crystallization temperature under a load of 68.6N. Specifically, it is a rate (mm³/sec) of a resin flowing out during 10 minutes from a nozzle having a diameter of 2.1 mm and a length of 8 mm, as measured by a Koka-type flow tester.

Here, the value Q of each fluorinated copolymer (1) which will be described in the following Examples is a value measured at a temperature of 220°C and under a load of 68.6N.

The production method of the fluorinated copolymer (1) is not particularly limited, and may be a method of charging TFE, ethylene and at least one member selected from the group consisting of IAC, IAH, NAC, NAH, CAC and CAH, and another monomer if necessary, into a reactor, and then copolymerizing them by using a conventionally used radical polymerization initiator. For example, it may be produced according to the polymerization method described in Patent Document 1.

Specifically, the polymerization method may be conventional bulk polymerization; solution polymerization using an organic solvent such as fluorohydrocarbon, chlorohydrocarbon, fluorochlorohydrocarbon, alcohol or hydrocarbon; suspension polymerization using an aqueous medium and, as the case requires, a proper organic solvent; and emulsion polymerization using an aqueous medium and an emulsifier. The polymerization may be carried out in a batch system or in a continuous system by using single reactor or multi reactor system stirring type polymerization apparatus, tubular type polymerization apparatus, etc. (Epoxy group-containing ethylene type copolymer or its composition (2))

A layer (II) made of an epoxy group-containing ethylene type copolymer or its composition (2) functions as an adhesive layer between the layer (I) containing a fluorinated copolymer (1) and a layer (III) made of the below-described vinyl chloride type copolymer or its composition (3).

As the epoxy group-containing ethylene type copolymer to be used for the layer (II), a copolymer comprising repeating units (E) based on ethylene and repeating units (F) based on an epoxy group-containing monomer; a copolymer comprising repeating units (E) based on ethylene, repeating units (F) based on an epoxy group-containing monomer and repeating units (G) based on another monomer; may, for example, be mentioned. As the epoxy group-containing ethylene type copolymer, one type may be used alone, or two or more types may be used in combination.

The epoxy group-containing monomer may, for example, be unsaturated glycidyl ethers (for example, allyl glycidyl ether, 2-methyl allyl glycidyl ether, and vinyl glycidyl ether), unsaturated glycidyl esters (for example, glycidyl acrylate, and glycidyl methacrylate). Among them, glycidyl methacrylate is preferred since it increases an adhesive property. As the epoxy group-containing monomer, one type may be used alone, or two or more types may be used in combination.

As such another monomer constituting the repeating units (G), an ethylenic unsaturated ester, and α-olefins other than ethylene may, for example, be mentioned, and as the ethylenic unsaturated ester, an acrylic acid ester (such as methyl acrylate or ethyl acrylate.), a methacrylic acid ester (such as methyl methacrylate or ethyl methacrylate), and a fatty acid vinyl ester such as vinyl acetate may, for example, be mentioned. Among them, an ethylenic unsaturated ester is preferred. As such another monomer, one type may be used alone, or two or more types may be used in combination.

The epoxy group-containing ethylene type copolymer is preferably a copolymer comprising repeating units (E) based on ethylene and repeating units (F1) based on glycidyl methacrylate.

As the copolymer, specifically, an ethylene-glycidyl methacrylate copolymer may be mentioned. When the copolymer is used, the interlayer adhesion is more excellent.

Further, a copolymer comprising repeating units (E) based on ethylene, repeating units (F1) based on glycidyl methacrylate, and repeating units (G1) based on an ethylenic unsaturated ester is also preferred in view of moldability and mechanical properties.

As the specific examples of the copolymer, an ethylene-glycidyl methacrylate-vinyl acetate copolymer, an ethylene-methyl acrylate-glycidyl methacrylate copolymer, an ethylene-ethyl acrylate-glycidyl methacrylate copolymer may be mentioned. Among them, from the viewpoint of adhesive property, an ethylene-methyl acrylate-glycidyl methacrylate copolymer and an ethylene-ethyl acrylate-glycidyl methacrylate copolymer are preferred.

The content of the repeating units (E) based on ethylene in the total repeating units constituting the epoxy group-containing ethylene type copolymer is preferably from 55 to 99.9 mol%, more preferably from 70 to 94 mol%. When the content of the repeating units (E) is at least the lower limit value of the above range, the epoxy group-containing ethylene type copolymer is excellent in heat resistance and toughness.

The content of the repeating units (F) based on an epoxy group-containing monomer in the total repeating units constituting the epoxy group-containing ethylene type copolymer is preferably from 0.1 to 15 mol%, more preferably from 1 to 10 mol%. When the content of the repeating units (F) based on an epoxy group-containing monomer is at least the lower limit value of the above range, the layer (II) is excellent in adhesion to other layers.

When the epoxy group-containing ethylene type copolymer comprises repeating units (G) based on another monomer, the content of the repeating units (G) based on another monomer is preferably from 1 to 30 mol%, more preferably from 10 to 30 mol%, in the total repeating units constituting the epoxy group-containing ethylene type copolymer.

The production method of the epoxy group-containing ethylene type copolymer is not particularly limited, and may be a method of charging ethylene and an epoxy group-containing monomer, and another monomer if necessary, into a reactor under a pressure of from 50 to 250 MPa, and then carrying out radical polymerization at from 120 to 300°C in the presence of an appropriate radical polymerization initiator. The polymerization may, for example, be conventional bulk polymerization, solution polymerization, and suspension polymerization. The polymerization may be carried out in a batch system or in a continuous system by using single reactor or multi reactor system stirring type polymerization apparatus, tubular type polymerization apparatus, etc.

As the epoxy group-containing ethylene type copolymer, commercially available one may be used. As an example of the commercially available one, an ethylene-glycidyl methacrylate copolymer "Bond Fast E (Trade name, manufactured by Sumitomo Chemical Co., Ltd.)" and an ethylene-methyl acrylate-glycidyl methacrylate copolymer "Bond Fast 7M (Trade name, manufactured by Sumitomo Chemical Co., Ltd.)" may, for example, be mentioned.

For the layer (II), in addition to an epoxy group-containing ethylene type copolymer itself, an epoxy group-containing ethylene type copolymer composition containing at least 50 mass% of an epoxy group-containing ethylene type polymer may be used.

As a component other than an epoxy group-containing ethylene type copolymer which may be contained in an amount of less than 50 mass% in the epoxy group-containing ethylene type copolymer composition, a modifier such as rubber, thermoplastic elastomer, an ethylene copolymer other than the epoxy group-containing ethylene type copolymer; various additives including a thermal stabilizer, a lubricant and a pigment; may be mentioned.

As the ethylene copolymer other than the epoxy group-containing ethylene type copolymer, from the viewpoint of excellent compatibility with the epoxy group-containing ethylene type copolymer, an ethylene-ethylenic unsaturated ester copolymer is preferred.

As the thermoplastic elastomer, from the viewpoint of excellent compatibility with the epoxy group-containing ethylene type copolymer, olefin-based TPO (thermoplastic polyolefin elastomer) may, for example, be mentioned.

### (Vinyl chloride type copolymer or its composition (3))

As the vinyl chloride type copolymer, a polyvinyl chloride copolymer comprising repeating units (H) based on vinyl chloride, and a chlorinated polyvinyl chloride copolymer obtained by chlorination of the polyvinyl chloride copolymer may be mentioned. They may be used alone, or in combination as a mixture of them.

The polyvinyl chloride copolymer may comprise, in addition to the repeating units (H) based on vinyl chloride, repeating units (J) based on α-olefin. As the α-olefin constituting the repeating units (J), an α-olefinhaving about from 2 to 10 carbon atoms such as ethylene, propylene, 1-butene, 3-methyl-1-butene, 1-pentene, 4-methyl-1-pentene, 1-hexene, 1-heptene, 1-octene, or 1-decene may be mentioned.

Based on the total amount of the repeating units (H) and the repeating units (J), the content of the repeating units (H) is preferably from 50 to 99.9 mol%, more preferably from 90 to 99.5 mol%, most preferably 95 to 99.5 mol%. The content of the repeating units (J) is preferably from 0.1 to 50 mol%, more preferably from 0.5 to 10 mol%, most preferably 0.5 to 5 mol%

The polyvinyl chloride copolymer may comprise, in addition to the repeating units (H) and the repeating units (J), repeating units (K) based on an epoxy group-containing monomer.

As the epoxy group-containing monomer constituting the repeating units (K), a glycidyl ester having an ethylenic unsaturated group capable of copolymerizing with ethylene, a glycidyl ether and a glycidyl amine may, for example, be mentioned.

The glycidyl ester may, for example, be glycidyl acrylate, glycidyl methacrylate, monoglycidyl maleate, diglycidyl maleate, monoglycidyl fumarate, diglycidyl fumarate, glycidyl crotonate, monoglycidyl itaconate, diglycidyl itaconate, monoglycidyl citraconate, diglycidyl citraconate, glutaconic acid monoglycidyl ester, glutaconic acid diglycidyl ester, mesaconic acid monoglycidyl ester, or mesaconic acid diglycidyl ester.

The glycidyl ether may, for example, be allyl glycidyl ether, 2-methyl allyl glycidyl ether, styrene-p-glycidyl ether, isopropenyl glycidyl ether, 1-butenyl glycidyl ether, 2-butenyl glycidyl ether, or 2-pentenyl glycidyl ether.

Among them, glycidyl methacrylate is preferred in view of availability, prices, effects, etc.

When the polyvinyl chloride copolymer is a copolymer comprising the repeating units (H), the repeating units (J) and the repeating units (K), based on the total amount of the repeating units (H), the repeating units (J) and the repeating units (K), the content of the repeating units (H) is preferably from 50 to 99.9 mol%, more preferably from 80 to 95.5 mol%. The content of the repeating units (J) is preferably from 0.1 to 10 mol%, more preferably from 0.5 to 5 mol%. The content of the repeating units (K) is preferably larger than 0 to 20 mol%, preferably from 1 to 15 mol%.

The production method of the polyvinyl chloride copolymer is not particularly limited, and may be a method of charging vinyl chloride, and α-olefinand an epoxy-group-containing monomer as required into a reactor under a pressure of from 0.5 to 2 MPa, and then carrying out radical polymerization at from 20 to 100°C in the presence of an appropriate radical polymerization initiator. The polymerization may, for example, be conventional bulk polymerization, solution polymerization, and suspension polymerization. The polymerization may be carried out in a batch system or in a continuous system by using single reactor or multi reactor system stirring type polymerization apparatus, tubular type polymerization apparatus, etc.

As the polyvinyl chloride copolymer, commercially available one may be used.

The polyvinyl chloride copolymer has an average polymerization degree of preferably from 500 to 4,000, more preferably from 500 to 2,000, particularly preferably from 600 to 1,000, most preferably from 600 to 800, from the viewpoint of moldability.

The chlorinated polyvinyl chloride copolymer is a copolymer in which one or more hydrogen atoms of the repeating units (H) contained in the vinyl chloride copolymer are substituted with chlorine. The number of chlorine atoms in respective repeating units (H) may be the same or different.

The chlorinated polyvinyl chloride copolymer is preferably one obtained by chlorination of the above-described polyvinyl chloride copolymer mentioned as a preferred embodiment.

As the chlorinated polyvinyl chloride copolymer, commercially available one may be used.

For the layer (3), in addition to a polyvinyl chloride copolymer, a chlorinated polyvinyl chloride copolymer obtained by chlorination of the polyvinyl chloride copolymer and a vinyl chloride type copolymer comprising a mixture thereof, a vinyl chloride type copolymer composition comprising the vinyl chloride type copolymer as a matrix and at least one member selected form the group consisting of carbon black, an elastomeric component, glass fibers and carbon fibers may also be used. The content of carbon black, the elastomer component, glass fibers and carbon fibers in the vinyl chloride type copolymer composition is preferably at most 50 mass%. That is, the vinyl chloride type copolymer composition is a vinyl chloride type copolymer composition containing more than 50 mass% of the vinyl chloride type copolymer.

As the elastomer component, a thermoplastic elastomer may, for example, be mentioned.

The vinyl chloride type copolymer composition may contain a modifier such as a stabilizer, a lubricant, a plasticizer, a filler, a colorant, rubber or an ethylene copolymer which is not a vinyl chloride type copolymer. As the ethylene copolymer, from the viewpoint of excellent compatibility with the vinyl chloride-type copolymer, chlorinated polyethylene or the like is preferred since it can improve the low-temperature impact strength.

### (Fluororesin laminate)

The fluororesin laminate of the present invention comprises a laminate [(I)/(II)/(III)] in which a layer (I) containing a fluorinated copolymer (1), a layer (II) made of an epoxy group-containing ethylene type copolymer or its composition (2), and a layer (III) made of a vinyl chloride type copolymer or its composition (3) are laminated in this order.

In the present invention, the layer (I) containing a fluorinated copolymer (1) is a layer containing at least 50%, preferably at least 75%, more preferably at least 90% of the fluorinated copolymer.

The fluororesin laminate of the present invention may be a laminate which further comprises at least one layer on the outside of the layer (III), and may, for example, be a laminate [(I)/(II)/(III)/(IV)] in which one resin layer (IV) is laminated on the outside of the layer (III), or a laminate [(I)/(II)/(III)/(IV)/(V)] in which two resin layers (IV) and (V) are laminated on the outside of the layer (III). The total number of layers in the fluororesin laminate of the present invention is not particularly limited so long as it comprises a laminate [(I)/(II)/(III)].

The layer (I) is firmly adhered to the layer (II) when they are laminated with heating. It can be considered that acid groups or acid anhydride groups of the monomer selected from the group consisting of IAC, IAH, NAC, NAH, CAC and CAH constituting the repeating units (C) in the fluorinated copolymer (1) of the layer (I) are bonded, *via* some sort of reaction at the laminate interface (e.g. an epoxy ring-opening reaction with an acid), to epoxy groups of the epoxy-group containing ethylene type copolymer of the layer (II).

Further, since the fluorinated copolymer (1) which forms the layer (I) has a low crystallization temperature of from 100 to 220°C, it becomes possible to produce the laminate [(I)/(II)/(III)] at a low temperature of from 150 to 260°C. Thus, during the production of a laminate, thermal decomposition of vinyl chloride type copolymer used in the layer (III) is suppressed, whereby the layer (III) is firmly adhered to the layer (I) *via* the layer (II).

Further, in the case of the laminate [(I)/(II)/(III)/(IV)] in which one resin layer (IV) is laminated on the outside of the layer (III), the layer (III) functions as an adhesion layer, whereby the laminate [(I)/(II)/(III)] is firmly adhered to the resin layer (IV).

The resin which forms a layer to be laminated outside of the layer (III) (layer (IV), layer (V),····) is not particularly limited, and may, for example, be polyethylene (e.g. high density polyethylene, medium-density polyethylene, low density polyethylene, ultra-low density polyethylene), polypropylene, polybutene, polybutadiene, ABS resin, polystyrene, a methacrylic resin, a norbornene resin, polyvinylidene chloride, polyester such as polybutylene terephthalate or polyethylene naphthalate, polycarbonate, polyamide, polyimide, thermoplastic polyimide, poly amino-bismaleimide, polysulfone, poly-phenylene sulfide, polyether ether ketone, polyether imide, polyether ketone, polyether sulfone, polythioether sulfone, polyether nitrile, polyphenylene ether, a thermosetting epoxy resin, an urethane resin, an urea resin, a phenolic resin, a melamine resin, a guanamine resin, a furan resin or a diallyl phthalate resin, or a mixture thereof.

Further, each of these resin as a matrix may contain carbon black, various elastomeric components, glass fibers and carbon fibers.

The thickness of each layer in the fluororesin laminate is not particularly limited. However, for example, the layer (I) is about from 3 to 2,000 µm, the layer (II) is about from 2 to 1,500 µm, the layer (III) is about from 50 to 100,000 µm. Further, the ratio of each layer is not particularly limited. However, for example, the layer (I) is from 0.003 to 98%, the layer (II) is from 0.002 to 97%, and the layer (III) is from 1.4 to 99.99%, based on the total thickness of the laminate.

The total thickness of the fluororesin laminate (i.e. the total thickness of three layers of the layer (I), the layer (II) and the layer (III), and the thickness of an additional layer is excluded) is not particularly limited. However, it may, for example, be from 50 to 100,000 µm, preferably from 100 to 30,000 µm.

The shape of the fluororesin laminate is not particularly limited, and may, for example, be a sheet shape, a three-dimensional shape that is a three-dimensionally shaped sheet, or a tubular shape.

### (Method for producing fluororesin laminate)

The fluororesin laminate of the present invention may suitably be produced, in view of moldability and productivity, by a method having a heat lamination step such as a multi-layer extrusion (co-extrusion molding), an extrusion lamination molding, a heating roll, a multi-layer laminate molding using a hot press, a multi-layer injection molding, or a multilayer blow molding.

Specifically, a method in which the layer (I) and the layer (II), and other layer as the case requires, are laminated and adhered by a single heat lamination step such as a multi-layer extrusion or a multi-layer laminate molding, thereby to form a fluororesin laminate. Further, a production method of carrying out two or more heat lamination steps such as a method of carrying out a first heat lamination step of laminating the layer (I) and the layer (II) by a multi-layer extrusion or an extrusion lamination molding, and then carrying out a second heat lamination step of heat pressing the layer (III) to the laminate comprising the layer (I) and the layer (II) obtained by the first heat lamination step; and a method of carrying out, as the case requires, a third heat lamination step of het pressing other layer, after carrying out the above-mentioned first heat lamination step and the second heat lamination step, may be mentioned.

Among the heat lamination steps, the heat lamination step of laminating the layer (III) and a layer other than the layer (III) under heating is carried out at preferably from 150 to 260°C, more preferably from 180 to 250°C. When the temperature of the heat lamination step of laminating the layer (III) and the layer other than the layer (III) is at least the lower limit value of the above range, they are sufficiently adhered to each other. When it is at most the upper limit value of the above range, thermal decomposition of vinyl chloride type copolymer constituting the layer (III) is suppressed, whereby sufficient adhesion is achieved.

For example, in the case of carrying out a first heat lamination step of forming a laminate [(I)/(II)] by a multi-layer extrusion or an extrusion lamination molding, and then carrying out a second heat lamination step of heat pressing the layer (III) to the laminate for producing a laminate [(I)/(II)/(III)], it is preferable to carry out the second heat lamination step within the above temperature range.

The heating holding time in each heat lamination step is preferably from 0.1 second to 1 hour. When the time is at least 0.1 second, stable adhesion is obtained, and when the time is at most 1 hour, excellent productivity is obtained.

The heat lamination step may be carried out in air, in an inert gas, or under reduced pressure. For example, for the purpose of suppressing thermal decomposition of the repeating units (F) of the epoxy group-containing ethylene type copolymer constituting the layer (II), it is preferably carried out in an inert gas or under reduced pressure.

As described above, since the fluororesin copolymer of the present invention uses fluorinated copolymer (1) which has a specific crystallization temperature range, the thermal decomposition of the layer (III) is suppressed during its production process, and the three layers are firmly adhered.

### EXAMPLES

Now, the present invention will be described in further detail with reference to Examples. However, it should be understood that the present invention is by no means thereby restricted.

In the present specification, "%" means "mass%" unless otherwise specified.

Measurements and tests in each example were carried out as follows.

### [Crystallization temperature]

By using a differential scanning calorimeter (manufactured by SII Ltd., DSC-7020), a sample of about 5 mg was maintained under dry air flow for 10 min at 300°C, followed by lowering the temperature to 100°C at a cooling rate of 10°C/min, and then a temperature which corresponds to the maximum value of the obtained crystallization peak was set as a crystallization temperature.

### [Composition of the fluorinated copolymer (1)]

It was determined by melt NMR analysis, fluorine content analysis and infrared absorption spectrum analysis.

### [Peel test]

Carried out in accordance with JIS K 6854-2: 1999.

### [Example 1]

(1) A polymerization tank having an internal volume of 430 liters equipped with a stirrer was deaerated, and 237.2 kg of 1-hydrotridecafluorohexane, 49.5 kg of 1,3-dichloro-1,1,2,2,3-pentafluoropropane (manufactured by Asahi Glass Company, Limited, AK225cb, hereinafter referred to as "AK225cb"), 122 kg of HFP, and 1.31 kg of CH₂=CH(CF₂)₄F (hereinafter referred to as C4olf, or also referred to as C4) were charged into the tank. Then, the temperature of the inside of the polymerization tank was raised to 66°C, and the pressure was increased to 1.5 MPa/G by using a mixed gas (TFE/ethylene = 89/11 (molar ratio)) of TFE and ethylene (hereinafter also referred to as E). As a polymerization initiator, 2.5 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure. Further, CH₂=CH(CF₂)₄F and IAH were continuously charged in amounts corresponding to 1 mol% and 0.4 mol%, respectively, based on the total molar amount of TFE and ethylene charged during the polymerization. 9.3 hours after the initiation of the polymerization, 29 kg of the monomer mixed gas was charged, and the internal temperature of the polymerization tank was lowered to room temperature and the pressure was purged to normal pressure.
(2) The obtained slurry-like fluorinated copolymer (1-1) was charged into a 860 L granulation tank having charged with 300 kg of water, and the temperature was raised to 105°C while stirring to distil out solvent for carrying out granulation. The obtained granules were dried for 15 hours at 150°C, whereby 33.2 kg of a dry granulated product of the fluorinated copolymer (1-1) was obtained.
   With regard to the fluorinated copolymer (1-1), melt NMR analysis, fluorine content analysis and infrared absorption spectrum analysis were carried out, and from the obtained results, the fluorinated copolymer (1-1) was found to have a repeating units based on TFE/ repeating units based on HFP/ repeating units based on CH₂=CH(CF₂)₄F/ repeating units based on IAH/ repeating units based on ethylene ratio of 46.2/9.4/1.0/0.4/43.0 (molar ratio).
   Further, the fluorinated copolymer (1-1) was found to have a value Q (measured by using a flow tester manufactured by Shimadzu Corporation. Measurement temperature was 220°C, and load was 68.6N) of 7.2 mm³/sec and a crystallization temperature of 170°C.
(3) On the other hand, each of an epoxy group-containing ethylene type copolymer (Trade name: Bond Fast E, manufactured by Sumitomo Chemical Co., Ltd.) comprising repeating units based on glycidyl methacrylate and repeating units based on ethylene in a molar ratio of 2.6/97.4, and a polyvinyl chloride copolymer (Trade name; TH-640, manufactured by Taiyo Vinyl Corp., average polymerization degree of from 620 to 660) was prepared.
(4) By using a three-layered tube molding die, a multi-layer extrusion molding was carried out to obtain a tube having the inner layer of fluorinated copolymer (1-1), the intermediate layer of "Bond Fast E", and the outer layer of "TH-640". As the extruder for the inner layer, one having a diameter of 40 mm was used and the cylinder temperature was set to from 220 to 240°C. As the extruder for the intermediate layer, one having a diameter of 30 mm was used and the cylinder temperature was set to from 180 to 220°C. As the extruder for the outer layer, one having a diameter of 50 mm was used ant the cylinder temperature was set to from 180 to 200°C.
   The temperature of the die after the resins forming three layers are merged, i.e. the temperature of the heat lamination step, was 240°C. Here, the supply portion of the intermediate layer extruder was, for the purpose of suppressing the thermal decomposition of materials, kept in a nitrogen atmosphere. The discharge amount of the extruder and the take-off speed of a tube were adjusted to obtain a final tube shape having an inner diameter of 6 mm and an outer diameter of 8 mm, and having an inner layer thickness of 0.1 mm, an intermediate layer of 0.1 mm, and an outer layer thickness of 0.8 mm. Thus, the take-off speed was set to be 10 m/min. The tube discharged from the die passed through the vacuum sizing unit, and its final shape was fixed by cooling in a water bath.
(5) The obtained three-layered tube corresponds to a fluororesin laminate [(I)/(II)/(III)] in which (1) a layer (I) of the fluorinated copolymer, (2) a layer (II) of an epoxy group-containing ethylene type copolymer, and a layer (III) of a polyvinyl chloride copolymer are sequentially laminated.

Further, the outer diameter of the laminate was measured by an infrared outer diameter measuring instrument after cooling, and the inner diameter and each layer thickness were measured, after cutting a molded tube, by using a 20 times magnified image of the cross-section taken by an optical microscope.

The three-layered tube was cut in a 75 mm length and then cut open in a longitudinal direction, to obtain a rectangular shaped sample having a longitudinal length of 75 mm and a length of the perpendicular side to the longitudinal direction of 10 mm. Then, the lamination interface between the layer (II) and the layer (III) of the sample was peeled off by hand about 1 cm in the longitudinal direction to obtain a test piece. Here, separation of the layer (I) and the layer (II) by hand was found to be not possible. The load at the time of peeling off the lamination interface between the layer (II) and the layer (III) of the test piece by using a tensile testing apparatus at 30 mm/min was divided by the width of the test piece, thereby to calculate to the peel strength (adhesive strength). The peel strength was found to be as high as 15.1 N/cm.

### [Example 2]

A three-layered tube was produced in the same manner as in Example 1, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 3]

(1) A polymerization tank having an internal volume of 430 liters equipped with a stirrer was deaerated, and 237.0 kg of 1-hydrotridecafluorohexane, 53.4 kg of AK225cb, 119 kg of HFP, and 1.31 kg of CH₂=CH(CF₂)₄F were charged into the tank. Then, the temperature of the inside of the polymerization tank was raised to 66°C, and the pressure was increased to 1.5 MPa/G by using a mixed gas (TFE/ethylene = 89/11 (molar ratio)) of TFE and ethylene. As a polymerization initiator, 2.5 L of a 3.1% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure. Further, CH₂=CH(CF₂)₄F and IAH were continuously charged in amounts corresponding to 1 mol% and 0.4 mol%, respectively, based on the total molar amount of TFE and ethylene charged during the polymerization. 6.5 hours after the initiation of the polymerization, 30 kg of the monomer mixed gas was charged, and the internal temperature of the polymerization tank was lowered to room temperature and the pressure was purged to normal pressure.
(2) The obtained slurry-like fluorinated copolymer (1-2) was charged into a 860 L granulation tank having charged with 300 kg of water, and the temperature was raised to 105°C while stirring to distil out solvent for carrying out granulation. The obtained granules were dried for 15 hours at 150°C, whereby 35.7 kg of a dry granulated product of the fluorinated copolymer (1-2) was obtained.

With regard to the fluorinated copolymer (1-2), melt NMR analysis, fluorine content analysis and infrared absorption spectrum analysis were carried out, and from the obtained results, the fluorinated copolymer (1-2) was found to have a repeating units based on TFE/ repeating units based on HFP/ repeating units based on CH₂=CH(CF₂)₄F/ repeating units based on IAH/ repeating units based on ethylene ratio of 46.9/9.0/1.0/0.4/42.7 (molar ratio).

Further, the fluorinated copolymer (1-2) was found to have a value Q (measured by using a flow tester manufactured by Shimadzu Corporation. Measurement temperature was 220°C, and load was 68.6N) of 15.3 mm³/sec and a crystallization temperature of 171°C.

A three-layered tube was produced by molding in the same manner as in Example 1, except that the fluorinated copolymer (1-2) was used as a material for the layer (I) instead of the fluorinated copolymer (1-1).

Thus produced tube was found to have a high peel strength of 16 N/cm, and the peeled portion was the lamination interface between the layer (II) and the layer (III), like Example 1.

### [Comparative Example 1]

(1) A polymerization tank having an internal volume of 94 liters equipped with a stirrer was deaerated, and 71.3 kg of 1-hydrotridecafluorohexane, 20.4 kg of AK225cb, 562 g of CH₂=CH(CF₂)₂F and 4.45 g of IAH were charged into the tank. Then, the temperature of the inside of the polymerization tank was raised to 66°C, and the pressure was increased to 1.5 MPa/G by using a mixed gas (TFE/ethylene = 89/11 (molar ratio)) of TFE and ethylene. As a polymerization initiator, 1 L of a 0.7% 1-hydrotridecafluorohexane solution of tert-butyl peroxypivalate was charged to initiate polymerization. During the polymerization, a monomer mixed gas (TFE/ethylene = 60/40 (molar ratio)) of TFE and ethylene was continuously charged to keep a constant pressure.
   Further, CH₂=CH(CF₂)₂F and IAH were continuously charged in amounts corresponding to 3.3 mol% and 0.5 mol%, respectively, based on the total molar amount of TFE and ethylene charged during the polymerization. 9.9 hours after the initiation of the polymerization, 7.28 kg of the monomer mixed gas was charged, and the internal temperature of the polymerization tank was lowered to room temperature and the pressure was purged to normal pressure.
(2) The obtained slurry-like fluorinated copolymer (1-3) was charged into a 200 L granulation tank having charged with 77 kg of water, and the temperature was raised to 105°C while stirring to distil out solvent for carrying out granulation. The obtained granules were dried for 15 hours at 150°C, whereby 6.9 kg of a dry granulated product of the fluorinated copolymer (1-3) was obtained.

With regard to the fluorinated copolymer (1-3), melt NMR analysis, fluorine content analysis and infrared absorption spectrum analysis were carried out, and from the obtained results, the fluorinated copolymer (1-3) was found to have a repeating units based on tetrafluoroethylene/ repeating units based on CH₂=CH(CF₂)₂F/IAH/ repeating units based on ethylene ratio of 58.6/2.0/0.3/39.1 (molar ratio).

Further, the fluorinated copolymer (1-3) was found to have a value Q (measured by using a flow tester manufactured by Shimadzu Corporation. Measurement temperature was 297°C, and load was 68.6N) of 30 mm³/sec and a crystallization temperature of 223°C.

By using a three-layered tube molding die, a multi-layer extrusion molding was carried out to obtain a tube having the inner layer of fluorinated copolymer (1-3), the intermediate layer of "Bond Fast E", and the outer layer of "TH-640". As the extruder for the inner layer, one having a diameter of 40 mm was used and the cylinder temperature was set to from 270 to 300°C. As the extruder for the intermediate layer, one having a diameter of 30 mm was used and the cylinder temperature was set to from 180 to 220°C. As the extruder for the outer layer, one having a diameter of 50 mm was used ant the cylinder temperature was set to from 180 to 200°C.

The temperature of the die after the resins forming three layers are merged, i.e. the temperature of the heat lamination step was 300°C. Here, the supply portion of the intermediate layer extruder was, for the purpose of suppressing the thermal decomposition of materials, kept in a nitrogen atmosphere. The discharge amount of the extruder and the take-off speed of a tube were adjusted to obtain a final tube shape having an inner diameter of 6 mm and an outer diameter of 8 mm, and having an inner layer thickness of 0.1 mm, an intermediate layer of 0.1 mm, and an outer layer thickness of 0.8 mm. Thus, the take-off speed was set to be 10 m/min. The tube discharged from the die passed through the vacuum sizing unit, and its final shape was fixed by cooling in a water bath.

By using thus obtained three-layered tube, it was attempted to prepare a peel strength test piece in the same manner as in Example 1. However, at the tube cutting step, the layer (II) and the layer (III) were separated at their interface. This suggests that the peel strength was too low to be measurable.

### [Comparative Example 2]

A three-layered tube was produced in the same manner as in Comparative Example 1, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to have a peel strength of 3 N/cm, and the peeled portion was the lamination interface between the layer (II) and the layer (III), like Example 1.

### [Comparative Example 3]

A three-layered tube was produced in the same manner as in Comparative Example 1, except that the cylinder temperature of the extruder for inner layer was set to from 220 to 240°C. However, the cylinder temperature was low, whereby resins were not extruded stably.

### [Example 4]

(1) A polymerization tank having an internal volume of 430 liters equipped with a stirrer was deaerated, and 257.4 kg of 1-hydrotridecafluorohexane, 35.2 kg of AK225cb, 145 kg of HFP, and 0.87 kg of CH₂=CH(CF₂)₄F were charged into the tank. Then, the temperature of the inside of the polymerization tank was raised to 66°C, and the pressure was increased to 1.47 MPa/G by using a mixed gas (TFE/ethylene = 92/8 (molar ratio)) of TFE and ethylene. As a polymerization initiator, 3.7 L of a 2% 1-hydrotridecafluorohexane solution of tert-butyl peroxypivalate was charged to initiate polymerization. During the polymerization, a monomer mixed gas (TFE/ethylene = 60/40 (molar ratio)) of TFE and ethylene was continuously charged to keep a constant pressure.
   Further, CH₂=CH(CF₂)₄F and IAH were continuously charged in amounts corresponding to 0.7 mol% and 0.3 mol%, respectively, based on the total molar amount of TFE and ethylene charged during the polymerization. 2.7 hours after the initiation of the polymerization, 24 kg of the monomer mixed gas was charged, and the internal temperature of the polymerization tank was lowered to room temperature and the pressure was purged to normal pressure.
(2) The obtained slurry-like fluorinated copolymer (1-4) was charged into a 860 L granulation tank having charged with 300 kg of water, and the temperature was raised to 105°C while stirring to distil out solvent for carrying out granulation. The obtained granules were dried for 15 hours at 150°C, whereby 31.0 kg of a dry granulated product of the fluorinated copolymer (1-4) was obtained.
   With regard to the fluorinated copolymer (1-4), melt NMR analysis, fluorine content analysis and infrared absorption spectrum analysis were carried out, and from the obtained results, the fluorinated copolymer (1-4) was found to have a repeating units based on TFE/ repeating units based on HFP/ repeating units based on CH₂=CH(CF₂)₄F/ repeating units based on IAH/ repeating units based on ethylene ratio of 48.7/10.2/0.8/0.3/40.0 (molar ratio).
   Further, the fluorinated copolymer (1-4) was found to have a value Q (measured by using a flow tester manufactured by Shimadzu Corporation. Measurement temperature was 220°C, and load was 68.6N) of 10.0 mm³/sec and a crystallization temperature of 161 °C.
(3) A three-layered tube was produced by molding in the same manner as in Example 1, except that the fluorinated copolymer (1-4) was used as a material for the layer (I) instead of the fluorinated copolymer (1-1) and the cylinder temperature of the extruder for inner layer was set to from 210 to 230°C.

Thus produced tube was found to have a high peel strength of 14 N/cm, and the peeled portion was the lamination interface between the layer (II) and the layer (III), like Example 1.

### [Example 5]

A three-layered tube was produced in the same manner as in Example 4, except that chlorinated polyvinyl chloride (Trade name: Heat resistance Kanevinyl H-536, manufactured by Kaneka-Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 6]

(1) A polymerization tank having an internal volume of 430 liters equipped with a stirrer was deaerated, and 234.2 kg of 1-hydrotridecafluorohexane, 32.0 kg of AK225cb, 117 kg of HFP, and 0.81 kg of CH₂=CH(CF₂)₄F were charged into the tank. Then, the temperature of the inside of the polymerization tank was raised to 66°C, and the pressure was increased to 1.35 MPa/G by using a mixed gas (TFE/ethylene = 94/6 (molar ratio)) of TFE and ethylene. As a polymerization initiator, 3.1 L of a 2% 1-hydrotridecafluorohexane solution of tert-butyl peroxypivalate was charged to initiate polymerization. During the polymerization, a monomer mixed gas (TFE/ethylene = 65/35 (molar ratio)) of TFE and ethylene was continuously charged to keep a constant pressure.
   Further, CH₂=CH(CF₂)₄F and IAH were continuously charged in amounts corresponding to 0.7 mol% and 0.3 mol%, respectively, based on the total molar amount of TFE and ethylene charged during the polymerization. 3.4 hours after the initiation of the polymerization, 24 kg of the monomer mixed gas was charged, and the internal temperature of the polymerization tank was lowered to room temperature and the pressure was purged to normal pressure.
(2) The obtained slurry-like fluorinated copolymer (1-5) was charged into a 860 L granulation tank having charged with 300 kg of water, and the temperature was raised to 105°C while stirring to distil out solvent for carrying out granulation. The obtained granules were dried for 15 hours at 150°C, whereby 34.2 kg of a dry granulated product of the fluorinated copolymer (1-5) was obtained.
   With regard to the fluorinated copolymer (1-5), melt NMR analysis, fluorine content analysis and infrared absorption spectrum analysis were carried out, and from the obtained results, the fluorinated copolymer (1-5) was found to have a repeating units based on TFE/ repeating units based on HFP/ repeating units based on CH₂=CH(CF₂)₄F/ repeating units based on IAH/ repeating units based on ethylene ratio of 54.3/9.1/0.9/0.3/35.4 (molar ratio).
   Further, the fluorinated copolymer (1-5) was found to have a value Q (measured by using a flow tester manufactured by Shimadzu Corporation. Measurement temperature was 220°C, and load was 68.6N) of 19.0 mm³/sec and a crystallization temperature of 162°C.
(3) A three-layered tube was produced by molding in the same manner as in Example 1, except that the fluorinated copolymer (1-5) was used as a material for the layer (I) instead of the fluorinated copolymer (1-1) and the cylinder temperature of the extruder for inner layer was set to from 210 to 230°C.

Thus produced tube was found to have a high peel strength of 15 N/cm, and the peeled portion was the lamination interface between the layer (II) and the layer (III), like Example 1.

### [Example 7]

A three-layered tube was produced in the same manner as in Example 6, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 8]

(1) A polymerization tank having an internal volume of 430 liters equipped with a stirrer was deaerated, and 191.6 kg of 1-hydrotridecafluorohexane, 193 kg of HFP, and 0.33 kg of CH₂=CH(CF₂)₄F were charged into the tank. Then, the temperature of the inside of the polymerization tank was raised to 66°C, and the pressure was increased to 1.57 MPa/G by using a mixed gas (TFE/ethylene = 89/11 (molar ratio)) of TFE and ethylene. As a polymerization initiator, 4.8 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure. Further, CH₂=CH(CF₂)₄F and IAH were continuously charged in amounts corresponding to 0.4 mol% and 0.4 mol%, respectively, based on the total molar amount of TFE and ethylene charged during the polymerization. 3.5 hours after the initiation of the polymerization, 24 kg of the monomer mixed gas was charged, and the internal temperature of the polymerization tank was lowered to room temperature and the pressure was purged to normal pressure.
(2) The obtained slurry-like fluorinated copolymer (1-6) was charged into a 860 L granulation tank having charged with 300 kg of water, and the temperature was raised to 105°C while stirring to distil out solvent for carrying out granulation. The obtained granules were dried for 15 hours at 150°C, whereby 30.2 kg of a dry granulated product of the fluorinated copolymer (1-6) was obtained.
   With regard to the fluorinated copolymer (1-6), melt NMR analysis, fluorine content analysis and infrared absorption spectrum analysis were carried out, and from the obtained results, the fluorinated copolymer (1-6) was found to have a repeating units based on TFE/ repeating units based on HFP/ repeating units based on CH₂=CH(CF₂)₄F/ repeating units based on IAH/ repeating units based on ethylene ratio of 38.0/17.0/0.4/0.3/44.3 (molar ratio).
   Further, the fluorinated copolymer (1-6) was found to have a value Q (measured by using a flow tester manufactured by Shimadzu Corporation. Measurement temperature was 150°C, and load-was 68.6N) of 40 mm³/sec and a crystallization temperature of 122°C.
(3) A three-layered tube was produced by molding in the same manner as in Example 1, except that the fluorinated copolymer (1-6) was used as a material for the layer (I) instead of the fluorinated copolymer (1-1) and the cylinder temperature of the extruder for inner layer was set to from 170 to 190°C.

Thus produced tube was found to have a high peel strength of 13 N/cm, and the peeled portion was the lamination interface between the layer (II) and the layer (III), like Example 1.

### [Example 9]

A three-layered tube was produced in the same manner as in Example 8, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 10]

(1) A polymerization tank having an internal volume of 430 liters equipped with a stirrer was deaerated, and 274.9 kg of 1-hydrotridecafluorohexane, 74.5 kg of HFP, and 2.8 kg of CH₂=CH(CF₂)₄F were charged into the tank. Then, the temperature of the inside of the polymerization tank was raised to 66°C, and the pressure was increased to 1.48 MPa/G by using a mixed gas (TFE/ethylene = 90/10 (molar ratio)) of TFE and ethylene. As a polymerization initiator, 2.0 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure.
   Further, CH₂=CH(CF₂)₄F and IAH were continuously charged in amounts corresponding to 4 mol% and 0.3 mol%, respectively, based on the total molar amount of TFE and ethylene charged during the polymerization. 3.5 hours after the initiation of the polymerization, 24 kg of the monomer mixed gas was charged, and the internal temperature of the polymerization tank was lowered to room temperature and the pressure was purged to normal pressure.
(2) The obtained slurry-like fluorinated copolymer (1-7) was charged into a 860 L granulation tank having charged with 300 kg of water, and the temperature was raised to 105°C while stirring to distil out solvent for carrying out granulation. The obtained granules were dried for 15 hours at 150°C, whereby 29.3 kg of a dry granulated product of the fluorinated copolymer (1-7) was obtained.
   With regard to the fluorinated copolymer (1-7), melt NMR analysis, fluorine content analysis and infrared absorption spectrum analysis were carried out, and from the obtained results, the fluorinated copolymer (1-7) was found to have a repeating units based on TFE/ repeating units based on HFP/ repeating units based on CH₂=CH(CF₂)₄F/ repeating units based on IAH/ repeating units based on ethylene ratio of 49.0/4.3/1.8/0.3/44.6 (molar ratio).
   Further, the fluorinated copolymer (1-7) was found to have a value Q (measured by using a flow tester manufactured by Shimadzu Corporation. Measurement temperature was 220°C, and load was 68.6N) of 3.9 mm³/sec and a crystallization temperature of 196°C.
(3) A three-layered tube was produced by molding in the same manner as in Example 1, except that the fluorinated copolymer (1-7) was used as a material for the layer (I) instead of the fluorinated copolymer (1-1) and the cylinder temperature of the extruder for inner layer was set to from 240 to 260°C.

Thus produced tube was found to have a high peel strength of 16 N/cm, and the peeled portion was the lamination interface between the layer (II) and the layer (III), like Example 1.

### [Example 11]

A three-layered tube was produced in the same manner as in Example 10, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 12]

(1) A polymerization tank having an internal volume of 430 liters equipped with a stirrer was deaerated, and 239.9 kg of 1-hydrotridecafluorohexane, 51.5 kg of AK225cb, 119 kg of HFP, and 1.32 kg of CH₂=CH(CF₂)₄F were charged into the tank. Then, the temperature of the inside of the polymerization tank was raised to 66°C, and the pressure was increased to 1.50 MPa/G by using a mixed gas (TFE/ethylene = 89/11 (molar ratio)) of TFE and ethylene. As a polymerization initiator, 2.5 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure.
   Further, CH₂=CH(CF₂)₄F and IAH were continuously charged in amounts corresponding to 1.0 mol% and 0.4 mol%, respectively, based on the total molar amount of TFE and ethylene charged during the polymerization. 8.4 hours after the initiation of the polymerization, 30 kg of the monomer mixed gas was charged, and the internal temperature of the polymerization tank was lowered to room temperature and the pressure was purged to normal pressure.
(2) The obtained slurry-like fluorinated copolymer (1-8) was charged into a 860 L granulation tank having charged with 300 kg of water, and the temperature was raised to 105°C while stirring to distil out solvent for carrying out granulation. The obtained granules were dried for 15 hours at 150°C, whereby 35.8 kg of a dry granulated product of the fluorinated copolymer (1-8) was obtained.
   With regard to the fluorinated copolymer (1-8), melt NMR analysis, fluorine content analysis and infrared absorption spectrum analysis were carried out, and from the obtained results, the fluorinated copolymer (1-8) was found to have a repeating units based on TFE/ repeating units based on HFP/ repeating units based on CH₂=CH(CF₂)₄F/ repeating units based on IAH/ repeating units based on ethylene ratio of 47.1/8.1/1.2/0.4/43.2 (molar ratio).
   Further, the fluorinated copolymer (1-8) was found to have a value Q (measured by using a flow tester manufactured by Shimadzu Corporation. Measurement temperature was 220°C, and load was 68.6N) of 5.5 mm³/sec and a crystallization temperature of 172°C.
(3) A three-layered tube was produced by molding in the same manner as in Example 1, except that the fluorinated copolymer (1-8) was used as a material for the layer (I) instead of the fluorinated copolymer (1-1).

Thus produced tube was found to have a high peel strength of 13 N/cm, and the peeled portion was the lamination interface between the layer (II) and the layer (III), like Example 1.

### [Example 13]

A three-layered tube was produced in the same manner as in Example 12, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 14]

(1) A polymerization tank having an internal volume of 430 liters equipped with a stirrer was deaerated, and 237.2 kg of 1-hydrotridecafluorohexane, 49.5 kg of 1,3-dichloro-1,1,2,2,3-pentafluoropropane (manufactured by Asahi Glass Company, Limited, AK225cb, hereinafter referred to as "AK225cb"), 122 kg of HFP, and 1.84 kg of CH₂=CH(CF₂)₆F were charged into the tank. Then, the temperature of the inside of the polymerization tank was raised to 66°C, and the pressure was increased to 1.5 MPa/G by using a mixed gas (TFE/ethylene = 89/11 (molar ratio)) of TFE and ethylene (hereinafter also referred to as E). As a polymerization initiator, 3.0 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure.
   Further, CH₂=CH(CF₂)₆F and IAH were continuously charged in amounts corresponding to 1 mol% and 0.4 mol%, respectively, based on the total molar amount of TFE and ethylene charged during the polymerization. 8.1 hours after the initiation of the polymerization, 29 kg of the monomer mixed gas was charged, and the internal temperature of the polymerization tank was lowered to room temperature and the pressure was purged to normal pressure.
(2) The obtained slurry-like fluorinated copolymer (1-9) was charged into a 860 L granulation tank having charged with 300 kg of water, and the temperature was raised to 105°C while stirring to distil out solvent for carrying out granulation. The obtained granules were dried for 15 hours at 150°C, whereby 32.3 kg of a dry granulated product of the fluorinated copolymer (1-9) was obtained.
   With regard to the fluorinated copolymer (1-9), melt NMR analysis, fluorine content analysis and infrared absorption spectrum analysis were carried out, and from the obtained results, the fluorinated copolymer (1-9) was found to have a repeating units based on TFE/ repeating units based on HFP/ repeating units based on CH₂=CH(CF₂)₆F/ repeating units based on IAH/ repeating units based on ethylene ratio of 46.3/9.2/1.0/0.4/43.1 (molar ratio).
   Further, the fluorinated copolymer (1-9) was found to have a value Q (measured by using a flow tester manufactured by Shimadzu Corporation. Measurement temperature was 220°C, and load was 68.6N) of 10.4 mm³/sec and a crystallization temperature of 171 °C.
(3) A three-layered tube was produced by molding in the same manner as in Example 1, except that the fluorinated copolymer (1-9) was used as a material for the layer (I) instead of the fluorinated copolymer (1-1).

Thus produced tube was found to have a high peel strength of 11 N/cm, and the peeled portion was the lamination interface between the layer (II) and the layer (III), like Example 1.

### [Example 15]

A three-layered tube was produced in the same manner as in Example 14, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 16]

(1) A polymerization tank having an internal volume of 430 liters equipped with a stirrer was deaerated, and 237.2 kg of 1-hydrotridecafluorohexane, 49.5 kg of 1,3-dichloro-1,1,2,2,3-pentafluoropropane (manufactured by Asahi Glass Company, Limited, AK225cb, hereinafter referred to as "AK225cb"), 122 kg of HFP, and 0.78 kg of CH₂=CH(CF₂)₂F were charged into the tank. Then, the temperature of the inside of the polymerization tank was raised to 66°C, and the pressure was increased to 1.5 MPa/G by using a mixed gas (TFE/ethylene = 89/11 (molar ratio)) of TFE and ethylene (hereinafter also referred to as E). As a polymerization initiator, 2.5 L of a 2% 1-hydrotridecafluorohexane solution of tert-butyl peroxypivalate was charged to initiate polymerization. During the polymerization, a monomer mixed gas (TFE/ethylene = 54/46 (molar ratio)) of TFE and ethylene was continuously charged to keep a constant pressure.
   Further, CH₂=CH(CF₂)₂F and IAH were continuously charged in amounts corresponding to 1 mol% and 0.4 mol%, respectively, based on the total molar amount of TFE and ethylene charged during the polymerization. 7.5 hours after the initiation of the polymerization, 29 kg of the monomer mixed gas was charged, and the internal temperature of the polymerization tank was lowered to room temperature and the pressure was purged to normal pressure.
(2) The obtained slurry-like fluorinated copolymer (1-10) was charged into a 860 L granulation tank having charged with 300 kg of water, and the temperature was raised to 105°C while stirring to distil out solvent for carrying out granulation. The obtained granules were dried for 15 hours at 150°C, whereby 32.3 kg of a dry granulated product of the fluorinated copolymer (1-10) was obtained.
   With regard to the fluorinated copolymer (1-10), melt NMR analysis, fluorine content analysis and infrared absorption spectrum analysis were carried out, and from the obtained results, the fluorinated copolymer (1-10) was found to have a repeating units based on TFE/ repeating units based on HFP/ repeating units based on CH₂=CH(CF₂)₂F/ repeating units based on IAH/ repeating units based on ethylene ratio of 46.4/9.3/0.9/0.4/43.0 (molar ratio).
   Further, the fluorinated copolymer (1-10) was found to have a value Q (measured by using a flow tester manufactured by Shimadzu Corporation. Measurement temperature was 220°C, and load was 68.6N) of 5.8 mm³/sec and a crystallization temperature of 173°C.
(3) A three-layered tube was produced by molding in the same manner as in Example 1, except that the fluorinated copolymer (1-10) was used as a material for the layer (I) instead of the fluorinated copolymer (1-1).

Thus produced tube was found to have a high peel strength of 14 N/cm, and the peeled portion was the lamination interface between the layer (II) and the layer (III), like Example 1.

### [Example 17]

A three-layered tube was produced in the same manner as in Example 16, except that chlorinated polyvinyl chloride (Trade name: Heat resistance Kanevinyl H-536, manufactured by Kaneka Corporation) was used as a material for the layer (III) instead of the polyvinyl chloride copolymer.

Thus produced tube was found to be not susceptible to peeling off by hand between the layer (I) and the layer (II) and peeling off by hand between the layer (II) and the layer (III).

### [Example 18]

Each of a fluorinated copolymer obtained in the same manner as in Example 1, an epoxy group-containing ethylene type copolymer (Trade name: Bond Fast 7M, manufactured by Sumitomo Chemical Co., Ltd.) comprising repeating units based on glycidyl methacrylate/ repeating units based on methyl acrylate/ repeating units based on ethylene in a weight ratio of 6/27/67, and a polyvinyl chloride copolymer (Trade name; TH-640, manufactured by Taiyo Vinyl Corp., average polymerization degree of from 620 to 660) was prepared, and in the same manner as in Example 1, a multi-layer extrusion molding was carried out to obtain a three-layered tube. The obtained three-layered tube corresponds to a fluororesin laminate [(I)/(II)/(III)] in which (1) a layer (I) of the fluorinated copolymer, (2) a layer (II) of an epoxy group-containing ethylene type copolymer and a layer (III) of a polyvinyl chloride copolymer are sequentially laminated.

Thus produced tube was found to have a high peel strength of 52 N/cm, and the peeled portion was the lamination interface between the layer (II) and the layer (III), like Example 1.

### [Example 19]

Each of a fluorinated copolymer obtained in the same manner as in Example 1, an epoxy group-containing ethylene type copolymer (Trade name: Bond Fast 7M, manufactured by Sumitomo Chemical Co., Ltd.) comprising repeating units based on glycidyl methacrylate/ repeating units based on methyl acrylate/ repeating units based on ethylene in a weight ratio of 6/27/67, and chlorinated polyvinyl chloride (Trade name: Heat resistance Kanevinyl H-536, manufactured by Kaneka Corporation) was prepared, and in the same manner as in Example 1, a multi-layer extrusion molding was carried out to obtain a three-layered tube. The obtained three-layered tube corresponds to a fluororesin laminate [(I)/(II)/(III)] in which (1) a layer (I) of the fluorinated copolymer, (2) a layer (II) of an epoxy group-containing ethylene type copolymer and a layer (III) of chlorinated polyvinyl chloride are sequentially laminated.

Thus produced tube was found to be not susceptible to peeling off by hand between the layer (I) and the layer (II) and peeling off by hand between the layer (II) and the layer (III).

With regard to Examples 1 to 19 and Comparative Examples 1 to 3, the molar ratio of repeating units of the respective components (A to D) of a fluorinated copolymer, the molar amount and the ratio of repeating units of the respective components (A to D) of a fluorinated copolymer, the production condition of a fluororesin laminate, the layer structure of a fluororesin laminate, the peel strength, the peeled portion, the crystallization temperature, etc. are summarized as Table 1 and Table 2.

**[Table 1]**

| | Layer (I) | Structure of fluorinated copolymer (1) of layer (I) | A | D | D | C | B | Total | A | C | B | A/(A+D) | AK225 | Crystallization temperature |
|---|---|---|---|---|---|---|---|---|---|---|---|---|---|---|
| | | | TFE | HFP | C4 | IAH | E | | TFE | IAH | E | TFE/ (TFE+C4) | | |
| Example 1 | (1-1) | TFE/HFP/C4olf/IAH/E = 46.2/9.4/1/0.4/43.0 | 46.2 | 9.4 | 1.0 | 0.4 | 43.0 | 100 | 51.6 | 0.4 | 48.0 | 81.6 | Contained | 170°C |
| Example 2 | (1-1) | TFE/HFP/C4olf/IAH/E = 46.2/9.4/1/0.4/43.0 | 46.2 | 9.4 | 1.0 | 0.4 | 43.0 | 100 | 51.6 | 0.4 | 48.0 | 81.6 | Contained | 170°C |
| Example 3 | (1-2) | TFE/HFP/C4olf/IAH/E = 46.9/9.0/1.0/0.4/42.7 | 46.9 | 9 | 1.0 | 0.4 | 42.7 | 100 | 52.1 | 0.4 | 47.4 | 82.4 | Contained | 171°C |
| Comparative Example 1 | (1-3) | TFE/C2olf/IAH/E = 58.6/2.0/0.3/39.1 | 58.6 | | 2.0 | 0.3 | 39.1 | 100 | 59.8 | 0.3 | 39.9 | 96.7 | Contained | 223°C |
| Comparative Example 2 | (1-3) | TFE/C2olf/IAH/E = 58.6/2.0/0.3/39.1 | 58.6 | | 2.0 | 0.3 | 39.1 | 100 | 59.8 | 0.3 | 39.9 | 96.7 | Contained | 223°C |
| Comparative Example 3 | (1-3) | TFE/C2olf/IAH/E = 58.6/2.0/0.3/39.1 | 58.6 | | 2.0 | 0.3 | 39.1 | 100 | 59.8 | 0.3 | 39.9 | 96.7 | Contained | 223°C |
| Example 4 | (1-4) | TFE/HFP/C4olf/IAH/E = 48.7/10.2/0.8/0.3/40.0 | 48.7 | 10.2 | 0.8 | 0.3 | 40.0 | 100 | 54.7 | 0.4 | 44.9 | 81.6 | Contained | 161°C |
| Example 5 | (1-4) | TFE/HFP/C4olf/IAH/E = 48.7/10.2/0.8/0.3/40.0 | 48.7 | 10.2 | 0.8 | 0.3 | 40.0 | 100 | 54.7 | 0.4 | 44.9 | 81.6 | Contained | 161°C |
| Example 6 | (1-5) | TFE/HFP/C4olf/IAH/E = 54.3/9.1/0.9/0.3/35.4 | 54.3 | 9.1 | 0.9 | 0.3 | 35.4 | 100 | 60.3 | 0.3 | 39.3 | 84.4 | Contained | 162°C |
| Example 7 | (1-5) | TFE/HFP/C4olf/IAH/E = 54.3/9.1/0.9/0.3/35.4 | 54.3 | 9.1 | 0.9 | 0.3 | 35.4 | 100 | 60.3 | 0.3 | 39.3 | 84.4 | Contained | 162°C |
| Example 8 | (1-6) | TFE/HFP/C4olf/IAH/E = 38.0/17.0/0.4/0.3/44.3 | 38.0 | 17 | 0.4 | 0.3 | 44.3 | 100 | 46.0 | 0.4 | 53.6 | 68.6 | Not contained | 122°C |
| Example 9 | (1-6) | TFE/HFP/C4olf/IAH/E = 38.0/17.0/0.4/0.3/44.3 | 38.0 | 17 | 0.4 | 0.3 | 44.3 | 100 | 46.0 | 0.4 | 53.6 | 68.6 | Not contained | 122°C |
| Example 10 | (1-7) | TFE/HFP/C4olf/IAH/E = 49.0/4.3/1.8/0.3/44.6 | 49.0 | 4.3 | 1.8 | 0.3 | 44.6 | 100 | 52.2 | 0.3 | 47.5 | 88.9 | Not contained | 196°C |
| Example 11 | (1-7) | TFE/HFP/C4olf/IAH/E = 49.0/4.3/1.8/0.3/44.6 | 49.0 | 4.3 | 1.8 | 0.3 | 44.6 | 100 | 52.2 | 0.3 | 47.5 | 88.9 | Not contained | 196°C |
| Example 12 | (1-8) | TFE/HFP/C4olf/IAH/E = 47.1/8.1/1.2/0.4/43.2 | 47.1 | 8.1 | 1.2 | 0.4 | 43.2 | 100 | 51.9 | 0.5 | 47.6 | 83.5 | Contained | 172°C |
| Example 13 | (1-8) | TFE/HFP/C4olf/IAH/E = 47.1/8.1/1.2/0.4/43.2 | 47.1 | 8.1 | 1.2 | 0.4 | 43.2 | 100 | 51.9 | 0.5 | 47.6 | 83.5 | Contained | 172°C |
| Example 14 | (1-9) | TFE/HFP/C6olf/IAH/E = 46.3/9.2/1.0/0.4/43.1 | 46.3 | 9.2 | 1.0 | 0.4 | 43.1 | 100 | 51.6 | 0.4 | 48.0 | 81.9 | Contained | 171°C |
| Example 15 | (1-9) | TFE/HFP/C6olf/IAH/E = 46.3/9.2/1.0/0.4/43.1 | 46.3 | 9.2 | 1.0 | 0.4 | 43.1 | 100 | 51.6 | 0.4 | 48.0 | 81.9 | Contained | 171°C |
| Example 16 | (1-10) | TFE/HFP/C2olf/IAH/E = 46.4/9.3/0.9/0.4/43.0 | 46.4 | 9.3 | 0.9 | 0.4 | 43.0 | 100 | 51.7 | 0.4 | 47.9 | 82.0 | Contained | 173°C |
| Example 17 | (1-10) | TFE/HFP/C2olf/IAH/E = 46.4/9.3/0.9/0.4/43.0 | 46.4 | 9.3 | 0.9 | 0.4 | 43.0 | 100 | 51.7 | 0.4 | 47.9 | 82.0 | Contained | 173°C |
| Example 18 | (1-1) | TFE/HFP/C4olf/IAH/E = 46.2/9.4/1/0.4/43.0 | 46.2 | 9.4 | 1.0 | 0.4 | 43.0 | 100 | 51.6 | 0.4 | 48.0 | 81.6 | Contained | 170°C |
| Example 19 | (1-1) | TFE/HFP/C4olf/IAH/E = 46.2/9.4/1/0.4/43.0 | 46.2 | 9.4 | 1.0 | 0.4 | 43.0 | 100 | 51.6 | 0.4 | 48.0 | 81.6 | Contained | 170°C |

**[Table 2]**

| | Layer (II) | Layer (III) | Cylinder temperature | | | Heat lamination step temperature | Peel strength | Peeled portion |
|---|---|---|---|---|---|---|---|---|
| | | | Inner layer temperature | Intermediate layer temperature | Outer layer temperature | | | |
| Example 1 | Bond Fast E | TH-640 | 220 to 240°C | 180 to 220°C | 180 to 200°C | 240°C | 15.1 N/cm | Between (II)/(III) |
| Example 2 | Bond Fast E | H-536 | 220 to 240°C | 180 to 220°C | 180 to 200°C | 240°C | Not peeled | |
| Example 3 | Bond Fast E | TH-640 | 220 to 240°C | 180 to 220°C | 180 to 200°C | 240°C | 16 N/cm | Between (II)/(III) |
| Comparative Example 1 | Bond Fast E | TH-640 | 270 to 300°C | 180 to 220°C | 180 to 200°C | 300°C | (II)/(III) were separated at the tube cutting step | |
| Comparative Example 2 | Bond Fast E | H-536 | 270 to 300°C | 180 to 220°C | 180 to 200°C | 300°C | 3 N/cm | Between (II)/(III) |
| Comparative Example 3 | Bond Fast E | TH-640 | 220 to 240°C | 180 to 220°C | 180 to 200°C | 300°C | Not molded | |
| Example 4 | Bond Fast E | TH-640 | 210 to 230°C | 180 to 220°C | 180 to 200°C | 240°C | 14 N/cm | Between (II)/(III) |
| Example 5 | Bond Fast E | H-536 | 210 to 230°C | 180 to 220°C | 180 to 200°C | 240°C | Not peeled | |
| Example 6 | Bond Fast E | TH-640 | 210 to 230°C | 180 to 220°C | 180 to 200°C | 240°C | 15 N/cm | Between (II)/(III) |
| Example 7 | Bond Fast E | H-536 | 210 to 230°C | 180 to 220°C | 180 to 200°C | 240°C | Not peeled | |
| Example 8 | Bond Fast E | TH-640 | 170 to 190°C | 180 to 220°C | 180 to 200°C | 240°C | 13 N/cm | Between (II)/(III) |
| Example 9 | Bond Fast E | H-536 | 170 to 190°C | 180 to 220°C | 180 to 200°C | 240°C | Not peeled | |
| Example 10 | Bond Fast E | TH-640 | 240 to 260°C | 180 to 220°C | 180 to 200°C | 240°C | 16 N/cm | Between (II)/(III) |
| Example 11 | Bond Fast E | H-536 | 240 to 260°C | 180 to 220°C | 180 to 200°C | 240°C | Not peeled | |
| Example 12 | Bond Fast E | TH-640 | 220 to 240°C | 180 to 220°C | 180 to 200°C | 240°C | 13 N/cm | Between (II)/(III) |
| Example 13 | Bond Fast E | H-536 | 220 to 240°C | 180 to 220°C | 180 to 200°C | 240°C | Not peeled | |
| Example 14 | Bond Fast E | TH-640 | 220 to 240°C | 180 to 220°C | 180 to 200°C | 240°C | 11 N/cm | Between (II)/(III) |
| Example 15 | Bond Fast E | H-536 | 220 to 240°C | 180 to 220°C | 180 to 200°C | 240°C | Not peeled | |
| Example 16 | Bond Fast E | TH-640 | 220 to 240°C | 180 to 220°C | 180 to 200°C | 240°C | 14 N/cm | Between (II)/(III) |
| Example 17 | Bond Fast E | H-536 | 220 to 240°C | 180 to 220°C | 180 to 200°C | 240°C | Not peeled | |
| Example 18 | Bond Fast 7M | TH-640 | 220 to 240°C | 180 to 220°C | 180 to 200°C | 240°C | 52 N/cm | Between (II)/(III) |
| Example 19 | Bond Fast 7M | H-536 | 220 to 240°C | 180 to 220°C | 180 to 200°C | 240°C | Not peeled | |

### INDUSTRIAL APPLICABILITY

The fluororesin laminate of the present invention comprising a layer (I), a layer (II) and a layer (III), or the fluororesin laminate which further comprising other layer and having at least four layers, is excellent in weather resistance, electrical insulation property, acid-alkali resistance, flame retardancy and gas permeability, and can be used for a multi-layer printed circuit board, a wiring/piping cover duct (protective tube), aircraft parts, vehicle parts, protecting outdoor parts of building materials called as exterior, building components such as outer wall and inner wall, electrical components, an industrial hose for transporting oils, liquid chemicals, paints, fruit juice, paste-like foods or the like, an fuel hose for transporting gasoline, diesel oil, alcohol or the like, a hot water supply hose, chemical tanks, fuel tanks, packaging, an industrial film for an agricultural plastic house or the like, a release film for cast film production, a semiconductor green sheet, a release film for IC chip production, a food film, wire coatings, a core material for rubber processing, etc.

The entire disclosure of Japanese Patent Application No. 2014-032232 filed on February 21, 2014 including specification, claims and summary are incorporated herein by reference in its entirety.

## Claims

1. A fluororesin laminate comprising a layer (I) containing a fluorinated copolymer (1), a layer (II) made of an epoxy group-containing ethylene type copolymer or its composition (2) and a layer (III) made of a vinyl chloride type copolymer or its composition (3), which layers are sequentially laminated,
wherein the fluorinated copolymer (1) comprises repeating units (A) based on tetrafluoroethylene, repeating units (B) based on ethylene and repeating units (C) based on at least one member selected from the group consisting of itaconic acid, itaconic anhydride, 5-norbornene-2,3-dicarboxylic acid, 5-norbornene-2,3-dicarboxylic anhydride, citraconic acid and citraconic anhydride,
the content of the repeating units (A) is from 25 to 80 mol%, the content of the repeating units (B) is from 20 to 75 mol%, and the content of the repeating units (C) is from 0.01 to 5 mol%, based on the total molar amount of the repeating units (A), the repeating units (B) and the repeating units (C), and
the fluorinated copolymer (1) has a crystallization temperature of from 100 to 220°C.

2. The fluororesin laminate according to Claim 1, wherein, in the epoxy group-containing ethylene type copolymer or its composition (2), the epoxy group-containing ethylene type copolymer is an epoxy group-containing ethylene type copolymer comprising repeating units (E) based on ethylene and repeating units (F) based on an epoxy group-containing monomer, and the composition is an epoxy group-containing ethylene type copolymer composition containing at least 50 mass% of the epoxy group-containing ethylene type copolymer.

3. The fluororesin laminate according to Claim 1 or 2, wherein, in the vinyl chloride type copolymer or its composition (3), the vinyl chloride type copolymer is a polyvinyl chloride copolymer, a chlorinated polyvinyl chloride copolymer or a mixture of a polyvinyl chloride copolymer and a chlorinated polyvinyl chloride copolymer, and the composition is a vinyl chloride type copolymer composition containing more than 50 mass% of the vinyl chloride type copolymer.

4. The fluororesin laminate according to any one of Claims 1 to 3, wherein the fluorinated copolymer (1) further comprises repeating units (D) based on another monomer and the molar ratio of the repeating units (A) to the repeating units (D) [(A)/(D)] is from 70/30 to 99.9/0.1.

5. The fluororesin laminate according to Claim 4, wherein the repeating units (D) contain repeating units (D1) based on hexafluoropropylene as another monomer.

6. The fluororesin laminate according to Claim 5, wherein the repeating units (D) further contain repeating units (D2) based on CH₂=CH(CF₂)_{Q1}F (wherein Q1 is an integer of from 2 to 10) as another monomer.

7. A process for producing the fluororesin laminate as defined in any one of Claims 1 to 6, comprising a heat lamination step of laminating the layer (III) and a layer other than the layer (III) under heating, wherein the heat lamination step is carried out at a temperature of from 150 to 260°C.
